# EUROPÄISCHE PATENTSCHRIFT

(11) **EP 2 978 615 B1**
(45) Veröffentlichungstag und Bekanntmachung des Hinweises auf die Patenterteilung: **12.07.2017**
(21) Anmeldenummer: 14700637.3
(22) Anmeldetag: 15.01.2014
(51) Int. Cl.: B60C 9/04, B60C 5/14

(54) **FAHRZEUGLUFTREIFEN**
VEHICLE PNEUMATICE TIRE
PNEU DE VEHICULE

(30) Priorität: 25.03.2013 DE 102013103026
(43) Veröffentlichungstag der Anmeldung: 03.02.2016
(73) Patentinhaber: Continental Reifen Deutschland GmbH, 30165 Hannover (DE)
(72) Erfinder: KLEFFMANN, Jens, 30453 Hannover (DE); GUARDALABENE, Joe, 30163 Hannover (DE); JEROMIN, Dieter, 30419 Hannover (DE)
(74) Vertreter: Finger, Karsten
(86) Internationale Anmeldenummer: PCT/EP2014/050639
(87) Internationale Veröffentlichungsnummer: WO 2014/154369

(56) Entgegenhaltungen:
- EP-A1- 0 997 325
- DE-T2- 60 219 417
- JP-A- S6 382 802
- JP-A- 2000 168 318

## Beschreibung

Die Erfindung betrifft einen Fahrzeugluftreifen in Radialbauart, insbesondere für Lastkraftwagen oder Busse, mit einer gasdichten, im Wesentlichen konstant dicken Innenschicht aus einer Gummimischung und mit einer Karkasse mit in eine Karkassgummierung eingebetteten Stahlkorden mit im Wesentlichen gleichem Durchmesser, wobei der Durchmesser der Stahlkorde zwischen 0,2 mm und 1,5 mm beträgt und die Innenschicht eine Dicke aufweist, die größer ist als das 4-Fache des Stahlkorddurchmessers.

Reifen für Lastkraftwagen und Busse müssen eine hohe Tragfähigkeit aufweisen und sind daher derart ausgeführt, dass sie für einen Einsatz unter einem relativ hohen Luftdruck geeignet sind. Die Karkasse dieser Reifen wird mit zugfesten Festigkeitsträgern, üblicherweise Stahlkorden, verstärkt. Da auch Reifen für Lastkraftwagen und Busse als schlauchlose Reifen ausgeführt sind, weisen sie zur Innenseite, zum Reifeninnenraum, eine gasdichte Innenschicht auf. Um die Gasdichtigkeit sicherzustellen, wird üblicherweise zur Herstellung der Innenschicht eine Kautschukmischung verwendet, die Butylkautschuk oder Halobutylkautschuk enthält. Die Dicke der Innenschicht ergibt sich aus den Anforderungen an die Gasdichtigkeit und dem spezifischen Gasdichtigkeitsdurchgang der eingesetzten Innenschichtmischung. Um die Produktionskosten möglichst gering zu halten, wird die Dicke der Innenschicht meist nicht größer gewählt als es für das Erreichen der geforderten Gasdichtigkeit notwendig ist.

Ein Reifen der eingangs genannten Art ist beispielsweise aus der EP 0 997 325 A1 bekannt. Der Reifen weist in der Karkasse Stahlkorde mit einem Durchmesser von 0,8 mm bis 0,9 mm und eine Innenschicht mit einer im Wesentlichen konstanten Dicke auf, welche bis zum 4,5-Fachen, insbesondere das 1,5- bis 3-Fache, des Stahlkorddurchmessers beträgt. Ein weiterer Fahrzeugluftreifen, dessen Innenschichtdicke dem Ein - bis 4,5-Fachen des Durchmessers der Stahlkorde in der Karkasse entspricht, ist aus der JP 2000 168318 A bekannt.

Ein weiterer Reifen der eingangs genannten Art ist beispielsweise aus der DE 602 19 417 T2 bekannt. Die Dicke der Innenschicht dieses Reifens soll nicht kleiner als das 0,15-Fache, aber auch nicht größer als das 4-Fache des Querschnittsdurchmessers des Karkasskords sein.

In Folge der zyklischen Belastungen eines Reifens im Betrieb werden die verschiedenen Bauteile im Reifen teilweise hohen Deformationen ausgesetzt. Da Reifen großteils aus viskoelastischem Material (Gummi) bestehen wärmen sich Reifen im Betrieb durch die Hystereseverluste in den Gummimischungen auf. Besonders hohe Temperaturen entstehen dabei im Bereich des Laufstreifens an den Gürtelkanten und in den Wulstbereichen. Die entstehende Wärmeenergie wird teilweise über die Reifenoberfläche an die Umgebung abgeführt. Dies erfolgt über die außenliegenden Bereiche des Reifens, wie Seitenwand und Laufstreifen, aber auch über die innenliegenden Bauteile, wodurch Wärmeenergie an die Luft im Innenraum des Reifens abgegeben wird, was zu einer Erwärmung der Luft im Innenraum führt. Ein Teil dieser Wärmeenergie wird über die Felge des Reifens an die Umgebung abgegeben. Bei dieser Wärmeabgabe an die Umgebung spielt auch die Wärmeleitfähigkeit der Stahlkorde in der Karkasseinlage eine Rolle, die im Vergleich zu Gummi relativ hoch ist. Die Stahlkorde in der Karkasseinlage bewirken unter anderem auch, dass die Wärmeenergie von den seitlichen Laufstreifenbereichen und von den Wulstbereichen in Richtung Seitenwände geleitet wird.

Es ist grundsätzlich bekannt, dass Gummimischungen bei höheren Umgebungstemperaturen eine reduzierte Dämpfung aufweisen. Um diesen Effekt mit dem Ziel der Reduzierung des Rollwiderstandes zu nutzen, liegt der Erfindung die Aufgabe zugrunde, eine Verbesserung der Isolation des Reifens zum Reifeninnenraum zu erzielen.

Gelöst wird die gestellte Aufgabe erfindungsgemäß dadurch, dass die Innenschicht eine Dicke aufweist, die zumindest dem 6-Fachen des Stahlkorddurchmessers entspricht.

Gemäß der Erfindung wird der Reifeninnenraum durch eine Innenschicht mit einer gewissen Mindestdicke besser isoliert, wobei die Dicke der Innenschicht auf den Durchmesser der Stahlkorde in der Karkasse abgestimmt wird, sodass berücksichtigt wird, dass Stahlkorde mit einem höheren Durchmesser prinzipiell in der Lage sind, Wärme besser zu leiten, als Stahlkorde mit einem geringeren Durchmesser. Die "Dicke" der Innenschicht ist ein arithmetischer Mittelwert aus Dicken an neun Messstellen, die über den inneren Umfang des Reifens verteilt sind, wie in der Beschreibung definiert. Es ist zu beachten, dass eine unbegrenzte Erhöhung der Innenschichtdicke nicht notwendigerweise zu einem besseren Rollwiderstand führt. Es ergibt sich - in Abhängigkeit der eingesetzten Innenschicht-Gummimischung, dem Durchmesser der Karkassstahlkorde und weiterer reifenspezifischer Parameter - eine optimale Dicke der Innerschicht. In Abhängigkeit der Randbedingungen, insbesondere der verwendeten Innenschichtmischung hinsichtlich ihrer Steifigkeit, Dämpfung und Temperaturleitfähigkeit, können bestimmte Verhältnisse der Innenschichtdicken zum Stahlkorddurchmesser für den Reifenrollwiderstand besonders günstig sein. Für eine deutlich messbare Verringerung des Rollwiderstandes ist es von Vorteil, wenn die Innenschicht eine Dicke aufweist, die zumindest dem 6-Fachen des Stahlkorddurchmessers entspricht.

Gemäß der Erfindung wird die Dicke der Innenschicht auf den Durchmesser des Stahlkords in der Karkasse abgestimmt, um derart für bestimmte Stahlkorddurchmesser ein Optimum in der Reduktion des Rollwiderstandes zu erzielen. Weist der Stahlkord in der Karkasse einen Durchmesser zwischen 0,2 mm und 0,5 mm auf, so kann die Dicke der Innenschicht zumindest dem 10-Fachen, insbesondere zumindest dem 15-Fachen des Stahlkorddurchmessers entsprechen. Dabei sollte die Dicke der Innenschicht höchstens 9 mm betragen. Mit einer dickeren Innenschicht lässt sich keine signifikante Verbesserung des Rollwiderstandes erzielen.

Weist der Stahlkord in der Karkasse einen Durchmesser zwischen 0,51 mm und 1,0 mm auf, so lässt sich eine optimale Reduktion des Rollwiderstandes mit einer Innenschicht erzielen, deren Dicke zumindest dem 7,5-Fachen des Stahlkorddurchmessers entspricht, wobei die Dicke der Innenschicht höchstens 11,4 mm betragen soll.

Enthält die Karkasse einen Stahlkord mit einem Durchmesser zwischen 1,1 mm und 1,5 mm, so ist es von Vorteil, wenn die Dicke der Innenschicht zumindest dem 6-Fachen des Stahlkorddurchmessers entspricht, wobei bei einem Stahlkord in der Karkasse mit einem Durchmesser zwischen 1,1 mm und 1,2 mm die Dicke der Innenschicht höchstens 13,2 mm, bei einem Stahlkord in der Karkasse mit einem Durchmesser > 1,2 mm die Dicke der Innenschicht höchsten 15 mm betragen sollte. In den angegebenen Bereichen lässt sich der Rollwiderstand des Reifens deutlich reduzieren.

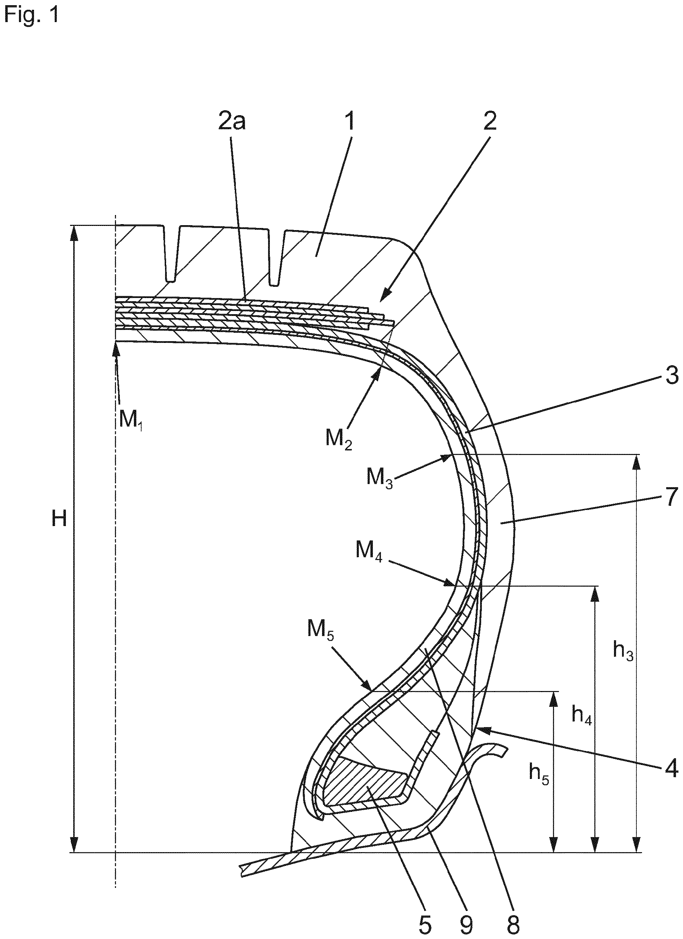

Weitere Merkmale, Vorteile und Einzelheiten der Erfindung werden nun anhand der Zeichnung, die schematisch ein Ausführungsbeispiel darstellt, näher beschrieben. Dabei zeigt Fig. 1 einen Teilquerschnitt durch einen Fahrzeugluftreifen in Radialbauart.

Der in Fig. 1 gezeigte Fahrzeugluftreifen ist ein Reifen für Lastkraftwagen oder Busse mit einem Laufstreifen 1, einem mehrlagigen Gürtelverband 2, einer Karkasse 3 mit in radialer Richtung oder im Wesentlichen in radialer Richtung verlaufenden Festigkeitsträgern aus Stahlkord, Wulstbereichen 4 mit Wulstkernen 5 und weiteren, näher nicht bezeichneten Wulstbauteilen, einer Seitenwand 7 und einer gasdichten Innenschicht 8. Der Gürtelverband 2 weist vier Gürtellagen 2a auf, die in herkömmlicher Weise ausgeführt und auf herkömmliche Weise angeordnet sein können. Die Stahlkorde in der Karkasse 3 sind in Gummi eingebettet, wobei die sogenannte Karkassgummierung an jeder Seite der Stahlkorde eine Gummierungsschicht bildet. Die innerste Reifenschicht ist die Innenschicht 8, welche für eine gute Gasdichtigkeit des Reifens verantwortlich ist und aus einer Gummimischung hergestellt ist, deren Kautschukkomponente üblicherweise ausschließlich oder überwiegend Butylkautschuk oder Halobutylkautschuk enthält, wobei auch ein Kautschukblend aus Butylkautschuk bzw. Halobutylkautschuk mit Naturkautschuk und/oder Styrolbutadienkautschuk Verwendung finden kann.

Die Erfindung befasst sich mit einer Optimierung der Dicke der Innenschicht 8, um die Wärmeabgabe des Reifens über die Innenschicht 8 an die Luft im Reifeninnenraum und damit an die Felge und die Umgebung zu reduzieren. Dadurch läuft der Reifen etwas wärmer als ein Reifen mit einer entsprechend dem Stand der Technik ausgeführten Innenschicht, was zu einer Reduktion des Rollwiderstandes führt. Dem Durchmesser der Stahlkorde in der Karkasseinlage 3 kommt eine wesentliche Rolle beim Ausmaß der Wärmeleitung im Reifen zu. Stahlkorde mit einem größeren Durchmesser sind prinzipiell besser in der Lage, Wärme zu leiten, als Stahlkorde mit einem geringeren Durchmesser.

Im Rahmen der Erfindung wurde nun festgestellt, dass eine beliebige Erhöhung der Dicke der Innenschicht 8 nicht notwendigerweise eine Verbesserung des Rollwiderstandes bewirkt, sondern dass es darauf ankommt, die Dicke der Innenschicht 8 an den Durchmesser der Stahlkorde in der Karkasse 3 optimal abzustimmen bzw. anzupassen, wobei üblicherweise die Stahlkorde in einer bestimmten Karkasse gleichen Durchmesser aufweisen.

Die Dicke der Innenschicht 8 ist bei erfindungsgemäß ausgeführten Fahrzeugluftreifen größer als das 4-Fache, insbesondere mindestens das 4,2-Fache, vorzugsweise zumindest das 4,5-Fache des Durchmessers des jeweiligen Stahlkordes in der Karkasse 3. Bei einer besonders bevorzugten Ausführungsform der Erfindung weist die Innenschicht 8 eine Dicke auf, die zumindest dem 6-Fachen des Stahlkorddurchmessers entspricht.

Bei Fahrzeugluftreifen, in deren Karkasse 3 Stahlkord enthalten ist, welcher einen Durchmesser zwischen 0,2 mm und 0,5 mm aufweist, kann die Innenschicht 8 eine Dicke aufweisen, die zumindest dem 10-Fachen, insbesondere zumindest dem 15-Fachen des Stahlkorddurchmessers entspricht. Bei derart ausgeführten Fahrzeugluftreifen sollte die Innenschichtdicke 9,0 mm nicht übersteigen.

Bei Fahrzeugluftreifen, die in der Karkasse 3 Stahlkord enthalten, welcher einen Durchmesser zwischen 0,51 mm und 1,0 mm aufweist, ist die Dicke der Innenschicht 8 zumindest das 7,5-Fache des Stahlkorddurchmessers. Die maximale Dicke der Innenschicht sollte bei solchen Fahrzeugluftreifen 11,4 mm nicht übersteigen.

In Fahrzeugluftreifen, die in der Karkasse 3 Stahlkord enthalten, welcher einen Durchmesser zwischen 1,1 mm und 1,5 mm aufweist, wird die Innenschichtdicke derart gewählt, dass sie zumindest das 6-Fache des Stahlkorddurchmessers ist. Weist der Stahlkord in der Karkasse 3 einen Durchmesser zwischen 1,1 mm und 1,2 mm auf, so sollte die maximale Dicke der Innenschicht 8 13,2 mm betragen. Hat der Stahlkord in der Karkasse 3 einen Durchmesser > 1,2 mm und maximal 1,5 mm, so sollte die maximale Innenschichtdicke 15 mm betragen.

Die Innenschicht 8 weist eine weitgehend konstante Dicke auf, die jedoch infolge der Beanspruchungen während der Vulkanisation des Reifens geringfügig variieren kann. Unter Dicke der Innenschicht 3 ist ihre gemessene durchschnittliche Dicke (arithmetischer Mittelwert) an vorzugsweise neun Messstellen gemeint, vier davon in jeder Reifenhälfte, eine im Zenit des Reifens. In Fig. 1 ist zur Ermittlung der Positionen dieser Messstellen die Stelle mit der maximalen Querschnittshöhe H im Zenit eingezeichnet, wobei die Querschnittshöhe H auf den auf einer Felge 9 montierten und unter Nenndruck gesetzten Reifen gemäß E.T.R.T.O.-Standard bezogen ist und der in radialer Richtung vorliegende Abstand zwischen einer zur Spitze der Wulstzehe gezogenen Bezugslinie 1 und dem Reifenzenit ist. Die Stelle M₁ befindet sich am Zenit, an der Stelle mit der höchsten Querschnittshöhe H des Reifens, die Messstellen M₂ radial innerhalb der Randkante der breitesten Gürtellage, die Messstellen M₃ in einer Höhe H₃ von 70% der Querschnittshöhe H, die Messstellen M₄ in einer Höhe H₄ von 45% der Querschnittshöhe H und die Messstellen M₅ in einer Höhe H₅ von 25% der Querschnittshöhe H.

### Bezugsziffernliste

- 1: Laufstreifen
- 2: Gürtelverband
- 2a: Gürtellage
- 3: Karkasse
- 4: Wulstbereich
- 5: Wulstkern
- 7: Seitenwand
- 8: Innenschicht
- 9: Felge

## Patentansprüche

1. Fahrzeugluftreifen in Radialbauart, insbesondere für Lastkraftwagen oder Busse, mit einer gasdichten, im Wesentlichen konstant dicken Innenschicht (8) und mit einer Karkasse (3) mit in eine Karkassgummierung eingebetteten Stahlkorden mit im Wesentlichen gleichem Durchmesser, wobei der Durchmesser der Stahlkorde zwischen 0,2 mm und 1,5 mm beträgt und die Innenschicht (8) eine Dicke aufweist, die größer ist als das 4-Fache des Stahlkorddurchmessers
**dadurch gekennzeichnet,**
**dass** die Innenschicht (8) eine Dicke aufweist, die zumindest dem 6-Fachen des Stahlkorddurchmessers entspricht.

2. Fahrzeugluftreifen nach Anspruch 1, **dadurch gekennzeichnet, dass** bei einem Stahlkord in der Karkasse (3) mit einem Durchmesser zwischen 0,2 mm und 0,5 mm die Dicke der Innenschicht (8) zumindest dem 10-Fachen, insbesondere zumindest dem 15-Fachen, des Stahlkorddurchmessers entspricht, wobei die Dicke der Innenschicht (8) höchstens 9 mm beträgt.

3. Fahrzeugluftreifen nach Anspruch 1, **dadurch gekennzeichnet, dass** bei einem Stahlkord in der Karkasse (3) mit einem Durchmesser zwischen 0,51 mm und 1,0 mm die Dicke der Innenschicht (8) zumindest dem 7,5-Fachen des Stahlkorddurchmessers entspricht, wobei die Dicke der Innenschicht (8) höchstens 11,4 mm beträgt.

4. Fahrzeugluftreifen nach Anspruch 1, **dadurch gekennzeichnet, dass** bei einem Stahlkord in der Karkasse (3) mit einem Durchmesser zwischen 1,1 mm und 1,5 mm die Dicke der Innenschicht (8) zumindest dem 6-Fachen des Stahlkorddurchmessers entspricht.

5. Fahrzeugluftreifen nach Anspruch 4, **dadurch gekennzeichnet, dass** bei einem Stahlkord in der Karkasse (3) mit einem Durchmesser zwischen 1,1 mm und 1,2 mm die Dicke der Innenschicht (8) höchstens 13,2 mm beträgt.

6. Fahrzeugluftreifen nach Anspruch 4, **dadurch gekennzeichnet, dass** bei einem Stahlkord in der Karkasse (3) mit einem Durchmesser größer als 1,2 mm die Dicke der Innenschicht (8) höchstens 15 mm beträgt.

## Claims

1. Pneumatic vehicle tyre of a radial type of construction, in particular for trucks or buses, with a gas-impermeable inner layer (8) of a substantially constant thickness and with a carcass (3) with steel cords of a substantially equal diameter embedded in a rubber carcass covering, the diameter of the steel cords being between 0.2 mm and 1.5 mm and the inner layer (8) having a thickness that is greater than 4 times the steel cord diameter,
**characterized**
**in that** the inner layer (8) has a thickness that corresponds to at least 6 times the steel cord diameter.

2. Pneumatic vehicle tyre according to Claim 1,
**characterized in that**, with a steel cord in the carcass (3) with a diameter of between 0.2 mm and 0.5 mm, the thickness of the inner layer (8) corresponds to at least 10 times, in particular at least 15 times, the steel cord diameter, the thickness of the inner layer (8) being at most 9 mm.

3. Pneumatic vehicle tyre according to Claim 1,
**characterized in that**, with a steel cord in the carcass (3) with a diameter of between 0.51 mm and 1.0 mm, the thickness of the inner layer (8) corresponds to at least 7.5 times the steel cord diameter, the thickness of the inner layer (8) being at most 11.4 mm.

4. Pneumatic vehicle tyre according to Claim 1,
**characterized in that**, with a steel cord in the carcass (3) with a diameter of between 1.1 mm and 1.5 mm, the thickness of the inner layer (8) corresponds to at least 6 times the steel cord diameter.

5. Pneumatic vehicle tyre according to Claim 4,
**characterized in that**, with a steel cord in the carcass (3) with a diameter of between 1.1 mm and 1.2 mm, the thickness of the inner layer (8) is at most 13.2 mm.

6. Pneumatic vehicle tyre according to Claim 4,
**characterized in that**, with a steel cord in the carcass (3) with a diameter of greater than 1.2 mm, the thickness of the inner layer (8) is at most 15 mm.

## Revendications

1. Pneumatique pour véhicule dans une structure à carcasse radiale, en particulier pour des poids lourds ou des bus, avec une couche intérieure (8) hermétique au gaz et dont l'épaisseur est, pour l'essentiel, constante, et avec une carcasse (3) comprenant des filins d'acier qui sont noyés dans un engommage de la carcasse et qui présentent, pour l'essentiel, un diamètre identique, selon lequel le diamètre des filins d'acier est compris entre 0,2 mm et 1,5 mm et la couche intérieure (8) présente une épaisseur qui est supérieure à 4 fois le diamètre des filins d'acier,
**caractérisé en ce que**
la couche intérieure (8) présente une épaisseur qui correspond tout au moins à 6 fois le diamètre des filins d'acier.

2. Pneumatique pour véhicule selon la revendication 1,
**caractérisé en ce que**
pour un filin d'acier noyé dans la carcasse (3) dont le diamètre est compris entre 0,2 mm et 0,5 mm, l'épaisseur de la couche intérieure (8) correspond tout au moins à dix fois, en particulier, tout au moins, à quinze fois le diamètre des filins d'acier, selon lequel l'épaisseur de la couche intérieure (8) s'élève au plus à 9 mm.

3. Pneumatique pour véhicule selon la revendication 1,
**caractérisé en ce que**
pour un filin d'acier noyé dans la carcasse (3) dont le diamètre est compris entre 0,51 mm et 1,0 mm, l'épaisseur de la couche intérieure (8) correspond tout au moins à 7,5 fois le diamètre des filins d'acier, selon lequel l'épaisseur de la couche intérieure (8) s'élève au plus à 11,4 mm.

4. Pneumatique pour véhicule selon la revendication 1,
**caractérisé en ce que**
pour un filin d'acier noyé dans la carcasse (3) dont le diamètre est compris entre 1,1 mm et 1,5 mm, l'épaisseur de la couche intérieure (8) correspond tout au moins à 6 fois le diamètre des filins d'acier.

5. Pneumatique pour véhicule selon la revendication 4,
**caractérisé en ce que**
pour un filin d'acier noyé dans la carcasse (3) dont le diamètre est compris entre 1,1 mm et 1,2 mm, l'épaisseur de la couche intérieure (8) s'élève au plus à 13,2 mm.

6. Pneumatique pour véhicule selon la revendication 4,
**caractérisé en ce que**
pour un filin d'acier noyé dans la carcasse (3) dont le diamètre est supérieur à 1,2 mm, l'épaisseur de la couche intérieure (8) s'élève au plus à 15 mm.
